# EUROPEAN PATENT APPLICATION

(11) **EP 3 981 708 A1**
(43) Date of publication of application: **13.04.2022**
(21) Application number: 20819256.7
(22) Date of filing: 05.06.2020
(51) Int. Cl.: B65D 83/00, B65B 1/04, B67D 7/00, B67D 7/02, B67D 7/32, B67D 7/34, B67D 1/00, G07F 13/02, G07F 13/04, G07F 11/00, B60P 3/025, G06Q 10/00, G06Q 20/18, G06Q 20/38, G06Q 30/02, G06Q 30/06, G06Q 50/10, G06Q 50/12

(54) **SYSTEM AND METHOD FOR THE SUPPLY AND/OR ACQUISITION OF BULK PRODUCTS**

(30) Priority: 05.06.2019 US 201962857602 P
(71) Applicant: Algramo (UK) Limited, London, W1S 4FF (GB)
(72) Inventor: MOLLER DOMÍNGUEZ, José Manuel, Providencia, Santiago (CL)
(74) Representative: De Vidal Gonzalez, Maria Ester
(86) International application number: PCT/CL2020/050061
(87) International publication number: WO 2020/243850

(57) **Abstract**

The invention relates to a system and method for the supply and/or acquisition of bulk products, the system comprising: a dispensing device; at least one identification and control module; at least one container; a user interface for providing each user access to a user account; and at least one user identification element, wherein the identification and control module comprises at least one identifying element and at least one control element.

## Description

The present invention refers to a system and method for the supply and/or acquisition of products in bulk, which allows users of the system to obtain either at a fixed supply point or at a mobile supply point, one or more products in a required amount through one or more containers.

Said invention solves several problems of the current technique, which become evident when evaluating the existing solutions and the specific characteristics of the invention in the following sections of this document.

### BACKGROUND

Currently, there are various solutions associated with dispensing of products with vending machines known as "vendomáticas" being the most widely used in the industry. However, said vending machines are mainly used for the dispensing of packaged products which are dispensed in unitary form and in a predetermined amount by the machine after payment is received or confirmed by the user. Therefore, faced with such solutions the need arises to offer users the dispensing of bulk products, allowing the user to select the amount of products to be dispensed by the machine.

In view of the above, US Patent US8712585B2 proposes a vending machine comprising the option of dispensing bulk products stored in containers of different sizes and types which are located inside the machine. The machine allows the selection of different amounts of products to be dispensed, products that are transported from the corresponding containers to complete the required amount of product and that are mechanically transported to a final disposable container. For this purpose, the machine of the US Patent US8712585B2 comprises a complex design and configuration comprising multiple containers with the products to be dispensed and disposable final containers to be delivered to the user. Furthermore, the machine comprises conventional means of payment using monetary and/or card transactions, which complicates the operation by the user.

In this context, the need arises to have a system and method for the supply and acquisition of bulk products which is simple in construction and logistics, user-friendly, and which avoids the use of disposable containers, being also friendly with the environment. Furthermore, also there is a need to facilitate the payment means for bulk products in vending machines freeing the user from handling money or cards, which must commonly use to activate the dispensing of products in current machines.

### TECHNOLOGY DESCRIPTION

The present invention refers to a system and method for the supply and acquisition of bulk products which allow the user to obtain either by approaching a fixed supply point or by coordinating the visit of a mobile supply point in a predefined location, one or more products in a required amount through one or more containers.

This system and method solves several problems associated with the supply of products of different kinds but focusing on sensitive products such as food or chemicals. One of these problems is related to the dispensing of bulk products which has the advantage of allowing the user to select the amount of product that is needed or that one is willing to pay, thereby avoiding the unnecessary purchase of products either for avoiding storage of disused products or disposing of unused products because their consumption date expired or because their use is no longer necessary.

The present invention takes care of this problem by means of a special dispenser of bulk products with the capacity to dose the amount of product to be dispensed according to the specific requirements of each user.

Another problem that the invention solves is related to the acquisition of multiple containers or packages each time a user wants to resupply one or more products. This can be seen typically in supermarkets, warehouses and basically in most places where products are sold wherein each product is presented in a container or package and in multiple formats for specific amounts. This entails an accumulation of containers in the form of waste which are mostly made of plastic or derivatives which is an unfriendly material with the environment due to its extremely long decomposition time.

The present invention takes care of this problem by means of a set of devices and technical elements that allow the reuse of containers or packages avoiding the accumulation of these taking advantage of the long useful life of their manufacturing materials and reducing the carbon footprint associated with their manufacture, among other advantages associated with avoiding the unnecessary use of containers through the implementation of technology.

Additionally, the system and method of the present invention solve a problem associated with the manipulation of the vending machine particularly the user need to have means of payment and handling cash or cards at the supply point. This entails different problems, including the fact that it makes the operation of the machine more complex requiring the operation of the means of payment and simultaneously operating the dispensing means and/or containers and also it exposes the user to security risks associated with handling money and cards in public places.

The present invention addresses this problem by integrating or linking the amount of product to be dispensed with a user identification element, where said user identification element is associated with the user data comprising an available account balance among others. Therefore, the need to handle money or means of payment directly at the supply site is avoided, easing the operation of the machine and substantially reducing the risks to the user safety, for example, theft.

As previously mentioned, the present invention solves multiple problems, in addition to those previously discussed, problems that will become apparent by reading the special characteristics of the technology according to what is highlighted in the following paragraphs.

In its most essential aspects, the system for the supply and/or acquisition of the technology bulk products comprises:
- a dispensing device for one or more types of bulk products comprising at least one dispensing area;
- at least one identification and control module arranged in connection with the dispensing device;
- at least one container arranged to receive one or more types of bulk products from the dispensing device when located in the dispensing area;
- a user interface for the access of each user to a user account, wherein said user account comprises user data; and
- at least one user identification element linked to at least one user account and at least one container, wherein said user identification element is associated with product/container information on the type of product that each container can receive, and is associated with user data corresponding to the at least one user account;
wherein the identification and control module arranged in connection with the dispensing device is configured to initiate a communication session with the user identification element setting a communication link between at least one user identification element and the dispensing device;
wherein the identification and control module comprises:
- at least one identifier element configured to detect the at least one user identification element and to access and analyze the product/container information associated with said at least one user identification element, identifying the at least one container linked to the at least one user identification element and determining the type of product to be dispensed within said container during the communication session; and
- at least one control element configured to access and analyze the user data associated with the at least one user identification element, controlling the amount of product to be dispensed during the communication session.

Furthermore, in its most essential aspects the invention comprises a method for the supply and/or acquisition of bulk products which comprises the following steps:
- initializing a user interface for the access of a user to a user account, wherein said user account comprises user data;
- locating at least one container in a dispensing area comprised by a product dispensing device;
- detecting through at least one identifier element comprised in an identification and control module arranged in communication with the dispensing device, at least one user identification element linked to at least one user account and to the container, wherein said user identification element is associated with product/container information about the type of product a container can receive, and is associated with the user data corresponding to the at least one user account;
- initiating a communication session between the identification and control module and the user identification element, establishing a communication link between said user identification element and the dispensing device;
- identifying the container and determining the type of product to be dispensed during the communication session according to the product/container information;
- dispensing an amount of product to the container by the dispensing device according to the user data, wherein the amount of product to be dispensed is controlled by at least one control element comprised in the identification and control module; and
- removing the container from the dispensing area.

By means of the characteristics of the system and method described above it is possible to associate the dispensing of bulk product to a particular user through the use of a container and an identification element that are previously associated with each other and with the user data. To do this, the technology uses automatic data capture and identification devices (AIDC) associated with current and developing wireless communication technology platforms, such as the Internet of Things (IoT).

"Dispensing device" should be understood as any machine or apparatus for dispensing bulk products capable of storing one or more types of bulk product safely and avoiding contact with the user for its dispensation to the area of dispensing. Preferably, the dispensing device comprises a product storage container to be dispensed for each type of product, a dispensing nozzle for each type of product, as well as a dispensing area for each type of product arranged to receive a container.

"Identification and control module" should be understood as any device capable of communicating wirelessly with the user identification elements and communicating with the dispensing device by means of wired or wireless communication. The identification and control module comprises an "identifier element", preferably, an optical reading device or emitter/ receiver such as a light beam, a camera or a signal reader, for example, RFID (Radio Frequency Identification) or NFC (Near Field Communication) which can energize the user identification element, if required, and establish a communication session with said user identification element receiving or retrieving a communication signal with the data and information associated with the user identification element. The identification and control module comprises a control element that preferably comprises at least one processor that receives the communication signal and analyzes the information and data contained therein determining control actions on the dispensing device. Preferably, the control element performs said control actions by means of an actuator element that sends control signals to the dispensing device, preferably, to the dispensing nozzles to control the dispensing of products.

"User identification element" must be understood as any means readable by the identification and control module either by means of a visual reading such as barcodes or QR codes or by means of an electronic reading of the sender/receiver type such as an RFID tag, magnetic strips, NFC. Preferably, the user identification element is of the passive type, that is to say, energized by the same identification and control module when placing close or in contact with an energization and reading zone comprising said module. Alternatively, the user identification element is of the active type, that is, it comprises an energy source that keeps said element energized. Preferably, the user identification element comprises an antenna that allows sending the information and data associated with it and/or that allows the retrieval of said data by the identification and control module. In the case of using visual reading by means of cameras or light beams, for example, the communication session between the user identification element and the identification and control module allows the latter to retrieve information and data through the use of visual information processing and/or by accessing said information and data redirecting it to a database stored in the system or in the network. Preferably, the user identification element is physically attached to the container or entirely arranged on at least one wall thereof.

By "container" is meant any container arranged to receive one or more bulk products from a dispensing device in a dispensing area thereof. Preferably, said container comprises a user identification element attached to or integrated therewith. Preferably, the container is a container specially arranged to receive a single type of product with one container for each product to be dispensed. Preferably, the container has a specially configured shape to be located in the dispensing area.

"User interface" must be understood as any platform such as a web page type or a computer application that allows users to create and to access a user account which may be of his own or of a family account. Said user account includes information called "user data" where said information may correspond but is not limited to user identification (name, address, etc.), user preferences (preferred products, predefined product amounts, point of preferred sourcing, preferred means of payment, etc.), historical data and predictions (information on past purchases, trends and data about need prediction for a product) and account balance (monetary amount available for the purchase of products), among others. Preferably, access to the user account is made through one or two factor authentication. Preferably, the user account also includes product/container information and allows viewing/managing user identification elements and containers linked to the account.

"Product/container information" should be understood as any information associated with the type of product to be dispensed in a particular container understanding that there is such a restriction in the system. Preferably, the containers associated with a special type of product comprise special characteristics depending on the type of product they receive, for example, maintaining hygiene in food storage and favoring the control of sensitive or dangerous substances as in the case of storing chemicals such as detergents.

"User" must be understood as natural or legal persons, family groups, etc., who have a user account on the user interface with the ability to use the dispensing device either at a fixed supply point or at a mobile supply point.

Next, alternative embodiments of the technology are described based on the specific characteristics and the different capacities and advantages that it has compared to current technologies.

According to an embodiment of the invention, before locating the at least one container in the dispensing area, the system and method further comprise:
- selecting, among the available dispensing devices in a zone at least one of them in order to supply at least one product; and
- sending the selected dispensing device to a location predetermined by the user.

In accordance with the previous embodiment, one or more dispensing devices can be found mounted on a mobile platform such as a transport vehicle, preferably an electric vehicle, being possible to have several mobile platforms circulating in a supply area. Then, either the user or the system itself selects one or more of the mobile platforms based on user data according to the user requirements for product dispensing, the availability of product in each dispenser, etc. Furthermore, the sending of one or more mobile platforms to a location may be determined by user data predetermined by the same user or by the user location in real time. This embodiment is called a mobile supply point.

According to another embodiment of the invention, the system and method further comprise that the dispensing device is arranged at a fixed supply point such as a retail store or a high-flow area which is called fixed supply point, or in a vehicle that transports it through different supply points according to the above discussed embodiment.

This embodiment allows the user to go by his own means to the location of the dispensing device to dispense at least one product or to establish communication with the identification and control module of the dispensing device remotely, giving the possibility for the user to request the delivery of said dispensing device to a location established by the user to dispense one or more products associated with one or more containers or sending said dispensing device to the user current position saved by a location mechanism built into the user equipment such as a GPS.

In accordance with another embodiment of the invention, the system and method further comprise that the selection of at least one dispensing device from the available dispensing devices is automatically performed according to the location of the available dispensing devices and the user location through the user interface. To do this, the technology has a shorter route selection and calculation mechanism to select the dispenser and optimal routes based on the location of the multiple dispensers and the user location either to guide the user to the location of the dispenser or to guide the dispenser to the user location, in the latter case when the dispenser is mounted on a mobile platform.

According to another embodiment of the invention, the system and method further comprise that the selection of at least one dispensing device from the available dispensing devices is made automatically according to the type of product required by the user based on the user data.

This allows the user to authorize the user interface to automatically locate the dispensing device that it deems most appropriate to the user needs in terms of product type and amount along with the user location and available dispensing devices.

In accordance with another embodiment of the invention, the system and method further comprise that the selection of at least one dispensing device from the available dispensing devices is made by the user when entering user data into the user interface where said user interface establishes a communication link between the user and the dispensing devices available for the user selection.

According to another embodiment of the invention, the system and method further comprise that the predetermined location is determined by the user as part of the user's data or the predetermined location is the user's current location.

The two embodiments described above allow the user to choose the dispensing device from the available devices in addition to coordinating its delivery to any location entered by the user.

According to another embodiment of the invention, the system and method further comprise a gate arranged on the edge of the dispensing area which separates said dispensing area from the outside environment. Said gate allows, among others, to avoid that at the time of dispensing some strange or unwanted element may enter the dispensing area, avoiding hindering or contaminating the product to be dispensed. This characteristic is particularly relevant for the dispensing of products sensitive to being in contact with the environment, for example, liquid edible products that can be easily contaminated permanently damaging the product and making it impossible to consume it or sensitive products such as enzymatic detergents, which lose effectiveness when contaminated.

According to another embodiment of the invention, the system and method further comprise that before locating the at least one container in the dispensing area, opening the gate to make the container enter the dispensing area.

According to another embodiment of the invention, the system and method further comprise that once the container is located in the dispensing area and before the dispensing of the selected product begins, closing the gate once it is detected that no element is hindering its closure or that no different element from the container for the selected product is inside it.

With such a provision for using the gate, misuse of the dispensing device is prevented as well as protecting the user in the event of any failure in dispensing. In addition, the system and method of the invention integrates the operation of the gate to the dispensing process, giving rise to the dispensing of the product only once the correct presence of the container has been detected and once the gate has been properly closed. Similarly, although one embodiment of the gate contemplates a mechanism that ensures closure, preventing the user from opening it during the dispensing process, an embodiment without a closure mechanism or in the event that the closure mechanism is violated by a third party, the method and system of the invention makes it possible to instantly stop the dispensing of the product if the opening of the gate is detected from the outside.

According to another embodiment of the invention, the system and method further comprise that the user identification element is arranged in the container either adhered to it or embedded during the container manufacturing process. Said configuration allows the container to be physically linked with the user data and ultimately to link the container with a product and associate it with a user account, wherein the user can link multiple identification elements to his account associated with different containers, in case multiple products are needed.

According to another embodiment of the invention, the system and method also comprise incorporating additional equipment or modules that are complementary to or associated with the dispensing of products, such as equipment for cleaning or sanitizing the container that will receive the product, prior to dispensing the product or a container sealing equipment, after product dispensing, in case such processes are required. In this context, the system and method of the invention is versatile and allows the integration of additional stages or sub-processes related to additional equipment either before and / or after the dispensing of products being incorporated into the process of the invention without altering the essential aspects thereof. The integration of the additional stages or sub-processes is carried out, according to one embodiment, by means of at least one identifier element incorporated into the additional equipment, identifying the user's container and incorporating said identification to the sub-process associated with the additional equipment.

According to a preferred option of said embodiment of the invention, before the step of locating at least one container in the dispensing area of the product dispensing device, the method further comprises the steps of:
- locating the at least one container in an operation area of at least one additional equipment associated or integrated with the dispensing device;
- detecting, through at least one identifier element included in the additional equipment, the at least one user identification element;
- initiating a communication session between the identification and control module and the user identification element, identifying the container; and
- executing an operation action of the at least one additional equipment.

Alternatively or in a complementary manner, after the step of removing the container from the dispensing area, the method further comprises the steps of:
- locating the at least one container in an operation area of at least one additional equipment associated or integrated with the dispensing device;
- detecting through at least one identifier element comprised in the at least one additional equipment, the at least one user identification element;
- initiating a communication session between the identification and control module and the user identification element, identifying the container; and
- executing an operation action of the at least one additional equipment.

In this way, the identification and control module controls the operation action of the at least one additional equipment as a function of the other stages of the method and / or integrates said operation action of the at least one additional equipment to any other stage of the method.

For example, the method and system can be configured to not dispensing any product in the event that the container to be used has not been sanitized by a sanitizing equipment associated with the dispenser, which can be verified by means of the identification element attached to the container which can store information regarding whether it has been sanitized or not, where when entering the dispensing area, it is read again by the identifying element to verify that said container has already been sanitized and is suitable for receiving the product selected by the user previously.

According to another embodiment of the invention, the system and method further comprise to display dispensing information to the user by the dispensing device, for example, by means of a display device arranged therein where said dispensing information is related to the dispensed amount of the acquired products together with the account balance available to obtain products. This dispensing information displayed by the display device also may be displayed on some electronic device such as a computer, a cell phone or a smart TV, in which the user can enter the user interface with his access data.

According to another embodiment of the invention, the system and method also comprise displaying user data which contains one or a combination of at least one of the following information: an account balance, predefined amount of products to be purchased, current amount of products purchased, expiration date of products purchased, among others. These data allow the user to know the current status of their products, in order to manage future refills or supplies, before any of their products run out.

According to another embodiment of the invention, the system and method further comprise displaying the product / container information which contains one or a combination of at least one of the following information: maximum capacity data of the container preset by commissioned operators; data about the amount of product to be dispensed per container preset by the user; and data about the type of product to be dispensed per container, among others.

According to another embodiment of the invention, the system and method further comprise the selection by the user of the product to be dispensed by the dispensing device and its amount, for example, by means of a dispensing interface in the dispensing device, for example, embedded in the display device. Optionally, the user may also make the selection of the product to be dispensed through an electronic device such as a computer, a cell phone or a smart TV, in which the user can enter the user interface with his access data.

In accordance with another embodiment of the invention, the system and method also comprise verifying that the user has a sufficient account balance in order to obtain the amount of the selected product where, in case of having an insufficient account balance, the user must be warned through the display device. If the user does have a sufficient balance the value corresponding to the amount of product must be deducted from the account balance corresponding to the user data stored in the user identification element.

According to another embodiment of the invention, the system and method further comprise providing the user either through the user interface or by means of a recharge device arranged in the dispensing device, a recharge interface that allows the user to increase his available balance. Preferably, as part of the user data, each user can configure a means of payment for the automatic recharge of the account balance.

According to another embodiment of the invention, the system and method further comprise providing additional information to the user by the user interface or on the display device, about the environmental contribution associated with the use of the system, for example, quantifying said contribution by means of the amount of greenhouse gases that have not been emitted into the environment. This additional information may be provided for different periods of time, by type of product, etc.

In accordance with another embodiment of the invention, the system and method further comprise storing a consumption record about the type of products selected by the user for his supply, the amounts dispensed in each of those selections, the time and place of supplies, as well as whether each dispensing occurred at a fixed dispensing point or if the dispensing device was moved to a user-defined location.

According to another embodiment of the invention, the system and method further comprise providing consumption information to the user by the user interface and based on the consumption record, about the average consumption in a period of time for each of the products selected by the user for his supply where the period of time can be daily, weekly, monthly, or according to any measurement period allowing to set a range.

According to another embodiment of the invention, the system and method also comprise alerting the user through the user interface and based on the consumption record, when the amount of any of the products purchased by the user is not enough to cover the needs of said user in a period of time.

In accordance with another embodiment of the invention, the system and method further comprise that the user configures the user interface so that the alert is activated when the product reaches a predefined amount or it is activated when the product is left a certain number of uses according to the consumption record.

According to another embodiment of the invention, the system and method further comprise that after the user is alerted, the dispensing device corresponding to the product causing the alert is automatically sent to the user's predetermined location. This embodiment allows to automate the delivery of products to the user thanks to the consumption record, which is enriched as the user supplies products over time and also thanks to the communication between the user interface and the identification and control module of the dispensing device.

The previous embodiments include the implementation of machine learning tools to predict the amount of product inside a container, all of which are in the user consumption record data avoiding the implementation of sensors and data analysis that make the system more expensive and more complex.

According to another embodiment of the invention, the system and method further comprise allowing the user through the user interface to set dates, times and places to plan the supply of at least one product by the dispensing device.

According to another embodiment of the invention, the system and method also comprise allowing the user through the user interface, to block the dispensing of one or more products which can be blocked for different identifier elements associated with his user account.

According to another embodiment of the invention, the system and method further comprise allowing the user through the user interface, to limit the amount of one or more products to be dispensed for one or more identifying elements associated with his user account.

According to another embodiment of the invention, the system and method further comprise allowing the user through the user interface, to manage one or more different user accounts.

According to another embodiment of the invention, the system and method also comprise sensors arranged in the dispensing device associated with the state of products, these sensors allow to measure parameters associated with temperature, pressure, humidity and/or amount of remaining product for each of the products arranged in said dispensing device, which enables the operator in charge to set refill times, in case that the remaining product amount parameter is under an established level or to take necessary measures in the event that any of the other parameters is out of their normal range.

According to another embodiment of the invention, the system and method also comprise a control system arranged in the dispensing device, which allows to maintain predefined conditions related to the temperature, pressure and/or humidity measured by the sensors for each of the products it contains.

According to another embodiment of the invention, the system and method further comprise an alert system arranged in the dispensing device which alerts the operator in charge in case one or more of the parameters of temperature, pressure, humidity and/or amount of product is below the previously set level.

According to another embodiment of the invention, the system and method also comprise the possibility to view the conditions obtained by the sensors through the display device, which can also display the expiration date of each of the products in addition to the registration number of each batch entered in the dispensing device, which allows to maintain the traceability of each product by the operator in charge.

Additionally, the technology allows the operators in charge to supervise the distribution chain of products in real time and online providing operator information that can be viewed by the operators in charge either through an operator interface in real time or through periodic reports. Thus, the operators in charge can maintain a control over the dispensing of products and can guarantee the quality of the products to be dispensed ensuring traceability and quality of the product from the time it is placed in the dispensing devices until it reaches the hands of the consumer. The operator information includes the above mentioned information about the state of the products, as well as information on the products themselves such as the batch or serial number and the expiration date particularly relevant in sensitive products such as food and chemicals.

In addition, the operator information allows the operators in charge to trace the entire life cycle of the products acquiring relevant information about the environmental impact of the distribution chain avoiding losses of information that usually occur at the current points of sale. Preferably, the operator information is automatically collected and stored by the identification and control module arranged in communication with the dispensing device or devices for subsequent retrieval by operators in charge or for delivery in real time, to the operator interface by means of a network. Alternatively, the operator information is retrieved by one or more servers that recover and process information associated with each product dispensing, for example, accessing to the user accounts.

### BRIEF DESCRIPTION OF THE FIGURES

As part of the present invention, the following representative figures thereof are presented, which teach preferred configurations of the technology and, therefore, should not be considered as limiting the definition of the claimed matter.
Figure 1 shows a dispensing, supply and logistics scheme, according to a preferred configuration of the invention.
Figure 2 shows the operating cycle for a mobile supply point, according to a preferred configuration of the invention.
Figure 3 shows a diagram with the steps to be followed by the user and by the dispensing device to dispense the product, according to the embodiment described in Figure 2.
Figure 4 shows the operating cycle for a fixed supply point, according to a preferred configuration of the invention.
Figure 5 shows a diagram with the steps to be followed by the user to dispense the product, according to the embodiment described in Figure 4.

### DETAILED DESCRIPTION OF A PREFERRED EMBODIMENT

The present technology has various applications due to the versatility of the system and its components. The following examples are intended to show the reader the primary use of the invention as well as other applications derived from such primary use.

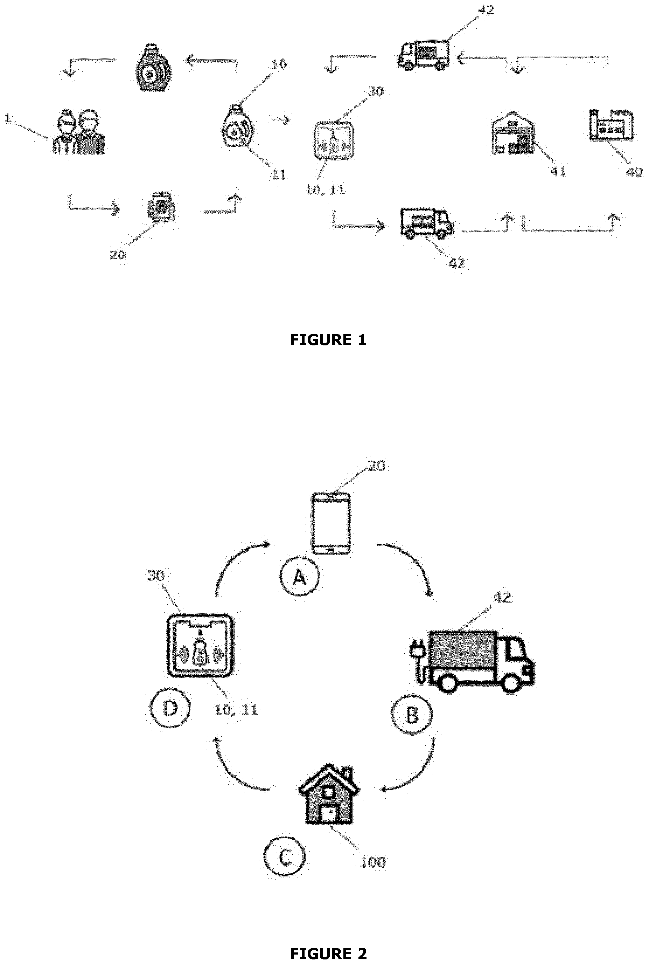

The invention has two processes that occur simultaneously as shown in Figure 1. The first one is related to the cycle in which the user is immersed (1) which by means of a smart container (10) which has a user identification element (11), can be supplied with a certain product through a dispensing device (30) arranged at supply points or sale points.

A new user (1) who wishes to use the system of this application must access the user interface (20) through an electronic device such as a cell phone, a computer, or one of the dispensing devices (30), to create a user account with user data allowing the user (1) to establish communication between their user account and the different identification and control modules arranged in the dispensing devices (30).

After creating the user account, the user (1) must purchase a container (10) in order to receive the products from the dispensing device (30). Said container (10) can be purchased from the same dispensing device (30) or at multiple acquisition points spread over kilometers around the dispensing devices (30).

Now, the user (1) only needs to ensure that there is a balance available in his user account which can be designed, for example, as an e-wallet to be able to carry out his first supply of products. Said balance can be recharged through the user interface (20) in one of the dispensing devices (30), or automatically by having an online payment method configured in the user account.

The user (1), through the user interface (20) establishes the product or products to be purchased and their amount, after which he must establish communication between the user interface (20) and the identification and control module of any of the dispensing devices (30). Once the user (1) physically meets the dispensing device (30) the user enters the container (10) into a dispensing area arranged in the dispensing device (30), after which the device (30) establishes communication between the container's user identification element (11) and the identification and control module to verify the order made by the user (1).

If there is sufficient balance and product available the product is dispensed in the amount selected by the user (1). After this, the value of the recharge is deducted from the user (1) balance and the user (1) can remove the container (10) from the dispensing area.

On the right side of Figure 1, the process that occurs parallel to the one described above associated with the operators in charge of the system, can also be observed. This process corresponds to the process of supplying the dispensing devices (30) which must be moved by vehicles (42) from warehouses or product storage points (41) to the resupply points or by means of supplying vehicles (42) they can go through the different devices (30) to carry out the corresponding product refills wherein said supplying vehicles (42) are filled in said warehouses (41). In addition, in the Figure 1 it can be seen that the warehouse (41) is fed directly from the product factory (40), for example, fast moving consumer goods factories (FMCG). Alternatively, dispensers (30) can be sourced directly from factories (40).

Each of the dispensing devices (30) has sensors and alarms that allow the operators in charge to be notified when any of the products has a certain level predefined by the operator in charge, for which it is necessary to manage a refill.

However, regarding the system usage options, once the user (1) has obtained a user account and at least one container (10) he has two options:

### 1. The user from his location point

Figure 2 shows the operation cycle of this system embodiment.

The user (1) can communicate with any of the dispensing devices (30) available in his area so that it can go through a vehicle (42) either by land, air or sea, to the point (100) where the user (1) is located and thus, it is able to supply him with the products that the user (1) needs. Said communication is made through the user interface (20) (step A in Figure 2)) to which the user (1) can access from an electronic device such as a cell phone. Preferably, this embodiment comprises an electric vehicle (42) (step B in Figure 2, specifically an electric tricycle) or any other vehicle powered by an alternative non-fossil fuel as a mobile platform thereby maintaining an ecological or environmentally friendly character. Depending on the amount of product to be transported human-powered mobile platforms, are also applicable.

Once the dispensing device (30) arrives at the user (1)defined location (100) (step C in Figure 2), the user (1) must proceed to place the container (10) associated with the product he wishes to purchase in the dispensing area of the dispenser device (10), after which the dispensing proceeds at the point selected by the user (1) (step D in Figure 2).

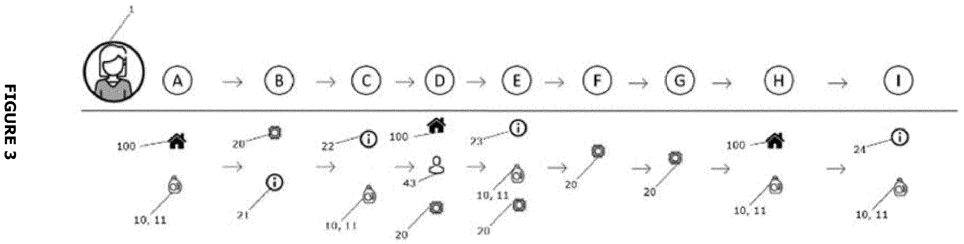

Figure 3 shows in detail the steps to be followed by a user (1) and the dispensing device (30), which are in different locations, to put them in contact and to proceed with the transfer of the dispensing device (30) to the user's (1) location and the dispensing of one or more products requested by the user (1).

In the table below, each of the steps comprising said product dispensing are detailed.

**Table 1: Description of steps to be followed by the user and the dispensing device to dispense the product**

| Step | Description | Touchpoints |
|---|---|---|
| A: Identification | Depending on the previous consumption cycles the container (10) advises the user (1) to check the level of the product. The user (1) realizes that he needs to purchase a new amount of the product, so he plans to order the delivery of the product. | Home (100), container (10) and user identification element (11) |
| B: Preparation | The user (1) checks the products offers and ensures through the user interface (20) that he has funds to buy products. | User interface (20), prices of the products (21) |
| C: Call | The user (1) uses the application in which the user interface (20) is displayed to dispatch (22) a tricycle (42) which has an expected arrival time, and wherein the user (1) can see in real time the route that the tricycle (42) takes until it reaches his home (100). | Dispatch (22) a tricycle (42), container (10) and user identification element (11) |
| D: Arriving | The user (1) meets the tricycle (42) carrying its container (10). The dispensing device (30) recognizes the container (10) when establishing communication with the user identification element (11), confirming the balance of his user account. | Home (100) of the user (1), operator of the tricycle (43) arriving together with the tricycle (42), user interface (20) |
| E: Choice | The user (1) places his container (10) in the dispensing area of the dispensing device (30), pressing a button that starts the dispensing of the product in the desired amount. | Product and amount (23), container (10) and user identification element (11), user interface (20) |
| F: Payment | The dispensing device (30) calculates the unit cost and the volume of the purchased product proceeding with the payment of the product from the user account. The user interface (20) proceeds to update the information on consumption and the account balance | User interface (20) |
| G: Home | The user (1) returns home (100) with his container (10) loaded with product and continues with his day. | The tricycle (42) leaves the place where the house is located (100) |
| H: Use and Consumption | The user (1) enjoys using a higher quality container (10) designed for a maximum user experience. The longer the user (1) uses the bulk product supply and / or acquisition system, more intelligent the user interface (20) will be to predict and satisfy its consumption. | Home (100), container (10) and user identification element (11) |
| I: Sharing experience | The user (1) is proud of the amount of recycling and containers he has avoided purchasing, along with the money he has saved. The user interface (20) performs a process of gamification of these metrics, allowing the user (1) to share this data along with additional comments that he wants to include in his social networks. | Ludification of metrics (24), empty container (10) or again with |

### 2. The user is directed to the location of the dispensing device

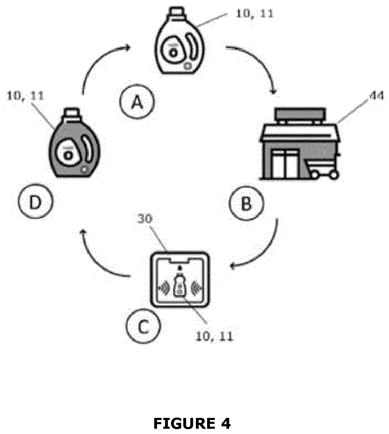

Figure 4 shows the cycle with the main steps of this system mode of use.

According to Figure 4, in order to make contact with any of the dispensing devices (30), once the product has been finished (step A in Figure 4) the user (1) moves or directs to the location point of any of the available dispensing devices (30), such as a supermarket (44) or store (step B in Figure 4). For that purpose the user (1) must search through the user interface (20) for a dispensing device (30) which dispenses the product he needs, together with its location.

After that, the user (1) must go to the location of the dispensing device (30) (step C in Figure 4) to subsequently dispense the product in the same way described for the option in which the dispenser device (30) is directed to the user's (1) location (100), filling the container (10) (step D in Figure 4).

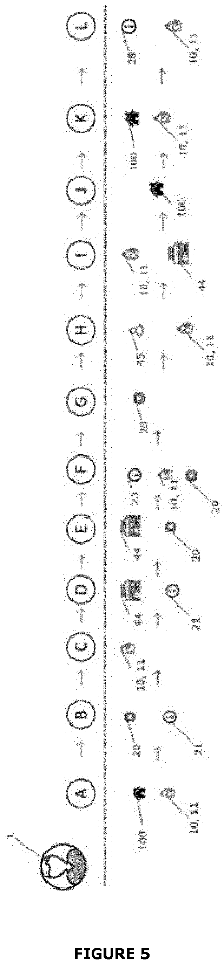

Figure 5shows in detail the steps to be followed by the user (1) and the dispensing device (30) for this embodiment of the system, where the user (1) goes to the location point of some of the dispensing devices (30) available for the product to be dispensed.

In the same way as for the case represented in Figure 3, in the table shown below, each of the steps comprising said product dispensing are detailed for the case in which the user (1) is directed to the location of the dispensing device (30).

**Table 2: Description of steps to be followed by the user and to dispense the product**

| Step | Description | Touchpoints |
|---|---|---|
| A: Identification | Depending on the previous consumption cycles, the container (10) advises the user (1) to check the level of the product. The user (1) realizes that he needs to purchase a new amount of the product, so he plans to go to the local store (44) to purchase a new amount of the product. | Home (100), container (10) and user identification element (11) |
| B: Preparation | The user (1) checks the product offers and ensures through the user interface (20) that he has funds to buy products. | User interface (20), product prices (21) |
| C: Transport | The user (1) goes to the local store (44) with his container (10). | Container (10) and user identification element (11) |
| D: Arriving | The user (1) arrives at the local store (44) closest to his home (100) and begins to buy products that he needs. | Local store (44), product prices (21) |
| E: Interaction with the Dispensing Device | The user (1) reaches the dispensing device (30). The dispensing device (30) recognizes the container (10), when establishing communication with the user identification element (11), confirming the balance of his user account through the user interface (20). | Local store (44), dispenser device (30), user interface (20) |
| F: Choice | The user (1) places his container (10) in the dispensing area of the dispensing device (30) proceeding to choose the desired product and the required amount, after which the dispensing of the product begins. | Product and amount (23), container (10) and user identification element (11), user interface (20) |
| G: Payment | The dispensing device (30) calculates the unit cost and the volume of the purchased product proceeding with the payment of the product from the user account. The user interface (20) proceeds to update the information on consumption and the account balance. | User interface (20) |
| H: Leave the dispensing device | The user (1) leaves the dispensing device (30) with its container (10) | Cashier (45); container (10) |
| | reloaded to continue buying other products, and then proceed to pay at the respective checkout. | and user identification element (11) |
| I: Back home | The user (1) goes back home (100) carrying the container (10) reloaded along with the rest of the products purchased in the local store (44). | Container (10) and user identification element (11) |
| J: Home | The user (1) arrives home (100) with the container (10) reloaded along with the rest of the products purchased at the local store (44). | Home (100) |
| K: Use and Consumption | The user (1) enjoys using a higher quality container (10), designed for a maximum user experience. The longer the user (1) uses the bulk product supply and / or acquisition system, more intelligent the user interface (20) will be to predict and satisfy its consumption. | Home (100), container (10) and user identification element (11) |
| L: Sharing experience | The user (1) is proud of the amount of recycling and containers he has avoided purchasing, along with the money he has saved. The user interface (20) performs a process of gamification of these metrics, allowing the user (1) to share this | Ludification of metrics (24), empty container (10) or again with a low level of product |
| | data along with additional comments that they want to include in their social networks. | |

### OTHER EXEMPLARY CONFIGURATIONS OF THE INVENTION

Other application examples that derive from the daily use of the system and method described by the present invention, are the following:

### Demand intelligence

From the knowledge of the demand for each of the products consumed by the user (1), the user interface (20) will create a consumption record which will become more robust and accurate as the user (1) refills the products and which allows to obtain the recharging trends and consumption habits of the user (1) with each of the products purchased.

With this data the user interface can offer the user (1) the option of an automatic and personalized subscription for consumer products in which said user does not need to worry about coordinating the visit of a dispensing device (30) or having to go to a recharging point where one of these devices is located, since the system will automatically detect the right time when the recharging must be carried out, keeping the user (1) always supplied.

Said recharge is notified to the user (1) by means of an alert or notification issued by the user interface (20) in advance, in which the user (1) has the option to desist from the recharge. In case of not desisting, the dispensing device (30) visits the location predefined by the user (1) (for example, his home) wherein one or more products will be recharged.

The user (1), for example, can leave the container (s) (10) to be recharged at the concierge of his home address, in case he works outside his home and in the afternoon, he can pick up the containers already recharged by the dispensing device (30).

### Schools

Another embodiment of the invention relates to a snack dispensing system for students where the containers (10) arranged with user identification elements (11) such as RFID identifiers (Radio Frequency Identification), for example, establish a communication between the container (10) and the identification and control module of the dispensing device (30).

The dispensed products may be liquid and/or solid wherein the user identification elements (11) may be associated with a student's user account or a parent's user account, who can recharge the student's balance and select the products and/or beverages that he can consume, including daily portions, weekly, monthly, etc.

Thanks to this system, children are prevented from having to handle money to buy their snacks in addition to obtaining the traceability of what they are consuming which will help parents in the event of combating diseases such as obesity and/or diabetes, for example.

### Veterinary

Another embodiment of the invention relates to an animal food and/or drink dispensing system where the animal has an identifying element (11) either in a container (10) arranged over a dispensing area next to the dispensing device (30) or transported in it, being identified by the dispensing device (30) when approaching it.

In this embodiment the user identification element (11) is associated with the owner of the animal who can control the amount of food and/or beverages that the dispensing device (30) can dispense daily, so that the owner does not have to worry about the task of filling the food and water containers every day.

Furthermore, the system is capable of calculating through the user interface (20), the daily consumption of food and beverages that the animal must have. Said calculation is carried out based on parameters, such as the species or breed to which the animal belongs, weight, diseases it may have, etc.

### Commercial Establishments

Consumer goods companies have a technical problem in defining products presentations for retail sales. Based on the technology proposed by the present invention there could now be infinite presentations for each of the products that are consumed in bulk according to the consumer, based on the purchase record obtained by the system's user interface (20).

Based on this solution, the problem of having shelves of multiple formats for each of the products is eliminated, therefore all the presentations can be at a single point in the dispensing device (30) which reduces the required space increasing the retailer profit per square foot.

In addition, the owners of each product can be offered incentives for having larger dispensing areas and/or for having a greater number of dispensing devices (30) in a specific sales location and/or for placing advertising for a certain product on the surface of the dispensing device (30) or displayed through the display device, in order to improve visibility of a certain product compared to a competitive product.

### Carbon Bonds

Another embodiment of the invention relates to the issuance of green bonds for companies because of the carbon footprint decrease due to the use of the present technology system where based on consumption information, the traceability of the positive environmental impact, such as the carbon dioxide that has stopped being emitted into the environment, can be obtained.

This accurate traceability enables to assign a value to the impact and thus be able to commercialize green bonds among the companies that achieve the greatest decrease, for example. This solution provides an accurate measurement of the environmental impact generated by the massive consumption of each of the products associated with the dispensing devices (30) and by the system user (1).

### Vehicles and gasoline

Following the same logic described for use in veterinary applications, a vehicle such as a car could be used as a container (10) having a user identification element (11) associated with the car owner's user account, where when the user (1) arrives with his car at a gasoline station a communication will be established between the car's user identifier element (11) and the identification and control module of the dispensing device (30), in this case gasoline dispenser, after which if there is sufficient balance to cover the amount of gasoline requested by the user (1) through the user interface (20), it will be enough for said user (1) to place the dispensing gun in the inlet of the car's fuel tank to start loading.

The entire operation must be subject to an authorization that the user (1) must give before starting loading, in order to prevent other people who drive the vehicle from carrying out fuel loads without the authorization of the user (1) to whom the user identification element (11) is associated. Such authorization may be given through the user interface (20) or through the display device of the dispensing device (30).

In addition, thanks to this system the user (1) will be able to compare the cost per litre of gasoline from the different companies using the system, thus he will be able to choose the one that offers the lowest price favoring competition between the different distributors.

### Perishable Products and Cold Chain

In another embodiment of the invention, thanks to the possibility of having accurate traceability of the products dispensed through the dispensing devices (30), it is possible to carry out an online and constant supervision of the perishable products quality by means of the dispensing device (30) different sensors, in order to be able to maintain the cold chains necessary for a proper preservation of the products.

In addition, in the event of problems with any of the products dispensed by one or more dispensers (30) in relation to quality problems in their production processing, it is possible to monitor the users (1) who have purchased said product, being able to quickly contact them through the user interface (20) or other forms of communication in order to warn consumers about any measures to be taken with said product.

## Claims

1. A system for the supply and/or acquisition of bulk products, **CHARACTERIZED in that** it comprises:
- a dispensing device for one or more types of bulk products comprising at least one dispensing area;
- at least one identification and control module arranged in communication with the dispensing device;
- at least one container arranged to receive one or more types of bulk products from the dispensing device when located in the dispensing area;
- a user interface for the access of each user to a user account wherein said user account comprises user data; and
- at least one user identification element linked to at least one user account and at least one container wherein said user identification element is associated with product/container information on the type of product that each container can receive, and it is associated with user data corresponding to the at least one user account;
wherein the identification and control module arranged in communication with the dispensing device is configured to initiate a communication session with the user identification element establishing a communication link between at least one user identification element and the dispensing device;
wherein the identification and control module comprises:
- at least one identifier element configured to detect the at least one user identification element and to access and analyze the product/container information associated with said at least one user identification element, identifying the at least one container linked to the at least one user identification element and determining the type of product to be dispensed within said container during the communication session; and
- at least one control element configured to access and analyze the user data associated with the at least one user identification element controlling the amount of product to be dispensed during the communication session.

2. The method for the supply and/or acquisition of bulk products according to claim 1, **CHARACTERIZED in that** it comprises a gate arranged at the edge of the dispensing area, which separates said dispensing area from the outside environment.

3. The system for the supply and / or acquisition of bulk products according to any of claims 1-2, **CHARACTERIZED in that** the user identification element is arranged in the container either attached to it or integrated during the container manufacturing process.

4. The system for the supply and / or acquisition of bulk products according to any of claims 1-3, **CHARACTERIZED in that** the dispensing device further comprises a display device, in order to display dispensing information.

5. The system for the supply and / or acquisition of bulk products according to any of claims 1-4, **CHARACTERIZED in that** it also comprises a dispensing interface in the dispensing device, integrated to the display device.

6. The system for supplying and / or acquiring bulk products according to any of claims 1-5, **CHARACTERIZED in that** it also comprises a refill device arranged in the dispenser device which comprises a refill interface.

7. The system for the supply and / or acquisition of bulk products according to any of claims 1-5, **CHARACTERIZED in that** the user interface comprises a reload interface.

8. The system for the supply and / or acquisition of bulk products according to any of claims 1-7, **CHARACTERIZED in that** it also comprises sensors arranged in the dispensing device associated with the status of the products, which allow measuring parameters associated with temperature, pressure, humidity and / or amount of product remaining for each of the products arranged in said dispensing device.

9. The system for the supply and / or acquisition of bulk products according to any of claims 1-8, **CHARACTERIZED in that** it further comprises a control system arranged in the dispensing device.

10. The system for the supply and / or acquisition of bulk products according to any of claims 1-9, **CHARACTERIZED in that** it further comprises an alert system arranged in the dispensing device.

11. The system for the supply and / or acquisition of bulk products according to any of claims 1-10, **CHARACTERIZED in that** it further comprises operator information displayed by means of an operator interface.

12. A method for the supply and / or acquisition of bulk products, **CHARACTERIZED in that** it comprises the following steps:
- initializing a user interface for a user's access to a user account, wherein said user account comprises user data;
- locating at least one container in a dispensing area comprised by a products dispensing device;
- detecting, through at least one identifier element comprised in an identification and control module arranged in communication with the dispensing device, at least one user identification element linked to at least one user account and the container, wherein said user identification element is associated with product / container information about the type of product that a container can receive, and is associated with user data corresponding to the at least one user account;
- initiating a communication session between the identification and control module and the user identification element establishing a communication link between said user identification element and the dispensing device;
- identifying the container and determining the type of product to be dispensed during the communication session, according to the product / container information;
- dispensing an amount of product to the container by the dispensing device, according to the user data, wherein the amount of product to be dispensed is controlled by at least one control element comprised in the identification and control module; and
- removing the container from the dispensing area.

13. The method for the supply and / or acquisition of bulk products according to claim 12, **CHARACTERIZED in that** it further comprises, before locating the at least one container in a dispensing area, that the user moves to the point of location of the dispensing device.

14. The method for the supply and / or acquisition of bulk products according to claim 12, **CHARACTERIZED in that** it further comprises, before locating the at least one container in a dispensing area:
- selecting, among the dispensing devices available in an area, at least one of them to supply at least one product; and
- sending the selected dispensing device to a location predetermined by the user.

15. The method for supplying and / or acquiring bulk products according to claim 14, **CHARACTERIZED in that** it further comprises making, by the user, the selection of the dispensing device through the user interface.

16. The method for the supply and / or acquisition of bulk products according to claim 14, **CHARACTERIZED in that** it further comprises making the selection of the dispensing device automatically, according to the location of the available dispensing devices and the location of the user through the user interface.

17. The method for the supply and / or acquisition of bulk products according to claim 16, **CHARACTERIZED in that** it further comprises making the selection of the dispensing device automatically according to the type and amount of product required by the user based on the user data.

18. The method for the supply and / or acquisition of bulk products according to claims 16 and 17, **CHARACTERIZED in that** it further comprises authorizing, by the user, the selection of the dispensing device automatically according to the type and amount of product required by the user based on the user data.

19. The method for the supply and / or acquisition of bulk products according to claims 12-18, **CHARACTERIZED in that** it further comprises determining the user's location as a location predetermined by him or determined by his current location.

20. The method for the supply and / or acquisition of bulk products according to any of claims 12-19, **CHARACTERIZED in that** it further comprises, before locating the at least one container in a dispensing area, opening a gate to perform entry of the container over the dispensing area.

21. The method for the supply and / or acquisition of bulk products according to claim 20, **CHARACTERIZED in that** it further comprises, once the container is located in the dispensing area and before dispensing an amount of product to the container by the dispensing device, to close the gate once no element is detected that hinders its closure or that is inside it and that is different from the container for the selected product.

22. The method for supplying and / or acquiring products in bulk according to any of claims 20-21, **CHARACTERIZED in that** it further comprises instantly stopping the dispensing of product if the opening of the gate is detected from the outside.

23. The method for the supply and / or acquisition of bulk products according to any of claims 12-22, **CHARACTERIZED in that** it further comprises linking multiple identification elements associated with different containers, to the user account, which are intended to contain different products.

24. The method for the supply and / or acquisition of bulk products according to any of claims 12-23, **CHARACTERIZED in that** it further comprises viewing by means of a display device or an electronic device, such as a computer, a cell phone or a smart TV, a dispensed amount for purchased products and an account balance available to obtain products.

25. The method for the supply and / or acquisition of bulk products according to claim 24, **CHARACTERIZED in that** it further comprises displaying by means of the display device or an electronic device, such as a computer, a cell phone or a smart TV, user data which contains one or a combination of at least one of the following information: account balance, predefined amounts of products to be purchased, current amount of purchased products, expiration date of purchased products.

26. The method for the supply and / or acquisition of bulk products according to claim 24, **CHARACTERIZED in that** it further comprises displaying by means of the display device or an electronic device, such as a computer, a cell phone or a smart TV, the product / container information which contains one or a combination of at least one of the following information: maximum container capacity, amount of product to be dispensed per container and type of product to be dispensed per container.

27. The method for the supply and / or acquisition of bulk products according to claim 26, **CHARACTERIZED in that** it further comprises presetting the maximum capacity of the container, by an operator and presetting the amount of product to be dispensed per container, by a user.

28. The method for the supply and / or acquisition of bulk products according to any of claims 24-27, **CHARACTERIZED in that** it further comprises selecting the product to be dispensed by the dispensing device and its amount through a dispensing interface in the dispensing device, integrated into the display device.

29. The method for the supply and / or acquisition of bulk products according to any of claims 12-28, **CHARACTERIZED in that** it further comprises selecting the product to be dispensed by the dispensing device and its amount by means of an electronic device, such as such as a computer, a cell phone or a smart TV, in which the user can enter to the user interface with his access data.

30. The method for the supply and / or acquisition of bulk products according to any of claims 24-29, **CHARACTERIZED in that** it further comprises verifying that the user has a sufficient account balance to obtain the amount of selected product.

31. The method for the supply and / or acquisition of bulk products according to claim 30, **CHARACTERIZED in that** it further comprises, in the event of having an insufficient account balance, alerting the user through the display device.

32. The method for the supply and / or acquisition of bulk products according to claim 30, **CHARACTERIZED in that** it further comprises, in case of having a sufficient account balance, discounting the value corresponding to the amount of product from the balance of account corresponding to the user data stored in the user identification element.

33. The method for the supply and / or acquisition of bulk products according to any of claims 12-32, **CHARACTERIZED in that** it further comprises increasing the user's available account balance by a recharge interface provided through the user interface.

34. The method for the supply and / or acquisition of bulk products according to any of claims 12-32, **CHARACTERIZED in that** it further comprises increasing the user's available account balance by a recharge interface provided through a refill device arranged in the dispensing device.

35. The method for the supply and / or acquisition of bulk products according to any of claims 24-34, **CHARACTERIZED in that** it further comprises providing additional information to the user, by means of the user interface or on the display device, about the environmental contribution associated with the use of the system.

36. The method for the supply and / or acquisition of bulk products according to any of claims 12-35, **CHARACTERIZED in that** it further comprises storing a consumption history about the type of products selected by the user for supply, the amounts dispensed in each of those selections, the time and place of supplies, and if each of the dispensing occurred at a fixed point of dispensing or if the dispensing device was moved to a location defined by the user.

37. The method for the supply and / or acquisition of bulk products according to claim 36, **CHARACTERIZED in that** it further comprises providing consumption information to the user by means of the user interface and based on the consumption history, about the average consumption in a period of time for each of the products selected by the user for supply, wherein the period of time can be daily, weekly, monthly or according to any measure of time that allows establishing a range.

38. The method for the supply and / or acquisition of bulk products according to any of claims 36-37, **CHARACTERIZED in that** it further comprises alerting the user through the user interface and based on the consumption history, when the amount of any of the products purchased by the user is not enough to cover the needs of said user in a period of time.

39. The method for the supply and / or acquisition of bulk products according to claim 38, **CHARACTERIZED in that** it further comprises configuring by the user, the user interface, so that the alert is activated when the product reaches a predefined amount or activated when the product has a certain number of uses left according to the consumption history.

40. The method for the supply and / or acquisition of bulk products according to any of claims 38-39, **CHARACTERIZED in that** it further comprises, after the alert to the user, automatically sending the dispensing device corresponding to the product causing the alerts to the default location of the user.

41. The method for the supply and / or acquisition of bulk products according to any of claims 36-40, **CHARACTERIZED in that** it further comprises implementing machine learning tools to predict the amount of product that exists inside a container, using the user's consumption history data.

42. The method for the supply and / or acquisition of bulk products according to any of claims 12-41, **CHARACTERIZED in that** it further comprises allowing the user, through the user interface, to establish dates, times and places to plan the supply of at least one product through the dispensing device.

43. The method for the supply and / or acquisition of bulk products according to any of claims 12-42, **CHARACTERIZED in that** it further comprises allowing the user, through the user interface, to block the dispensing of one or more products which can be blocked for different identifying elements associated with his user account.

44. The method for the supply and / or acquisition of bulk products according to any of claims 12-43, **CHARACTERIZED in that** it further comprises allowing the user, through the user interface, to limit the quantity to be dispensed for one or more products for one or more identifying elements associated with his user account.

45. The method for the supply and / or acquisition of bulk products according to any of claims 12-44, **CHARACTERIZED in that** it further comprises allowing the user, through the user interface, to manage one or more different user accounts.

46. The method for the supply and / or acquisition of bulk products according to any of claims 12-45, **CHARACTERIZED in that** it further comprises measuring parameters associated with temperature, pressure, humidity and / or amount of remaining product for each of the products arranged in the dispensing device through sensors arranged in said dispensing device.

47. The method for the supply and / or acquisition of bulk products according to claim 46, **CHARACTERIZED in that** it further comprises establishing refill schedules by an operator, for the dispensing device in the event that the amount parameter of remaining product is below than an established level.

48. The method for the supply and / or acquisition of bulk products according to any of claims 46-47, **CHARACTERIZED in that** it further comprises maintaining predefined conditions related to the temperature, pressure and / or humidity measured by the sensors for each one of the products contained in the dispensing device, by means of a control system arranged in said dispensing device.

49. The method for the supply and / or acquisition of bulk products according to any of claims 46-48, **CHARACTERIZED in that** it further comprises alerting the operator in the event that one or more of the parameters of temperature, pressure, humidity and / or amount of product is below the established level, by means of an alert system arranged in the dispensing device.

50. The method for the supply and / or acquisition of bulk products according to any of claims 24-49, **CHARACTERIZED in that** it further comprises displaying the conditions obtained by the sensors through the display device, which can also display the expiration date of each of the products and the registration number of each batch of products entered in the dispensing device.

51. The method for the supply and / or acquisition of bulk products according to any of claims 46-50, **CHARACTERIZED in that** it further comprises supervising the distribution of products to the dispensing devices by the operator through operator information, which comprises data associated with temperature, pressure, humidity and / or amount of remaining product for each of the products arranged in the dispensing device through the sensors arranged in said dispensing device, in addition to information related to the batch or series number of products and their expiration date displayed by an operator interface in real time and online.

52. The method for the supply and / or acquisition of bulk products according to claim 51, **CHARACTERIZED in that** it further comprises collecting and storing the operator information automatically by the identification and control module arranged in communication with the dispensing device.

53. The method for the supply and / or acquisition of bulk products according to claim 52, **CHARACTERIZED in that** it further comprises rescuing the operator information by the operator.

54. The method for the supply and / or acquisition of bulk products according to any of claims 52-53, **CHARACTERIZED in that** it further comprises sending the operator information in real time to the operator interface through a wireless network.

55. The method for the supply and / or acquisition of bulk products according to any of claims 52-54, **CHARACTERIZED in that** it further comprises rescuing the operator information by one or more servers which process information associated with each product dispensing, accessing the user accounts of each of the users who use the dispensing devices.

56. The system for the supply and / or acquisition of bulk products according to any of claims 1-11, **CHARACTERIZED in that** it further comprises at least one additional equipment associated or integrated to the dispensing device with at least one identifying element.

57. The method for the supply and / or acquisition of bulk products according to any of claims 12-55, **CHARACTERIZED in that** it further comprises:
- before the step of locating at least one container in the dispensing area of the product dispensing device, the steps of:
• locating the at least one container in an area of operation of at least one additional equipment associated or integrated with the dispensing device;
• detecting through at least one identifier element included in the additional equipment, the at least one user identification element;
• initiating a communication session between the identification and control module and the user identification element, identifying the container; and
• executing an operation action of the at least one additional equipment; and / or
- after the step of removing the container from the dispensing area:
• locating the at least one container in an area of operation of at least one additional equipment associated or integrated with the dispensing device;
• detecting through at least one identifier element comprised in the at least one additional equipment, the at least one user identification element;
• initiating a communication session between the identification and control module and the user identification element, identifying the container; and
- executing an operation action of the at least one additional equipment;
wherein the identification and control module controls the operation action of the at least one additional equipment as a function of the other steps of the method and / or integrates said operation action of the at least one additional equipment to any other step of the method.
